# EUROPÄISCHE PATENTSCHRIFT

(11) **EP 2 440 353 B1**
(45) Veröffentlichungstag und Bekanntmachung des Hinweises auf die Patenterteilung: **20.03.2013**
(21) Anmeldenummer: 10732244.8
(22) Anmeldetag: 08.06.2010
(51) Int. Cl.: B23B 27/16, B23C 5/22

(54) **Schneidwerkzeug**
Cutting tool
Outil de coupe

(30) Priorität: 10.06.2009 AT 36109 U
(43) Veröffentlichungstag der Anmeldung: 18.04.2012
(73) Patentinhaber: Ceratizit Austria Gesellschaft M.b.H., 6600 Reutte (AT)
(72) Erfinder: BURTSCHER, Peter, A-6651 Häselgehr (AT); DIEPOLD, Anton, 82491 Grainau (DE); SCHLEINKOFER, Uwe, A-6600 Reutte (AT)
(86) Internationale Anmeldenummer: PCT/AT2010/000199
(87) Internationale Veröffentlichungsnummer: WO 2010/141966

(56) Entgegenhaltungen:
- EP-A1- 1 197 281
- WO-A1-2007/094723
- JP-A- 9 108 909
- JP-A- 2004 167 635
- US-A- 3 740 807
- US-A- 5 199 828
- US-A- 6 155 754

## Beschreibung

Die Erfindung betrifft ein Schneidwerkzeug mit den Merkmalen des Oberbegriffs des Anspruches 1.

Ein derartiges Schneidwerkzeug ist aus EP 1 197 281 A bekannt. Dieses vorbekannte Schneidwerkzeug ist als Fräser ausgebildet, dessen Werkzeuggrundkörper mehrere Einsatzsitze zur Lagerung jeweils eines Wendeschneideinsatzes aufweist. Jeder Wendeschneideinsatz ist mittels eines Spannstiftes in Form einer Spannschraube am Einsatzsitz befestigt. Dabei durchsetzt die Spannschraube ein Durchgangsloch des Wendeschneideinsatzes und ist in ein Befestigungsloch im Werkzeuggrundkörper eingeschraubt, wobei sich das Befestigungsloch schräg zu einer Ebene einer Bodenfläche des Einsatzsitzes erstreckt. Die Lochwandung des Durchgangsloches weist eine Lagerfläche auf, an der ein kugelsegmentförmiger Abschnitt eines Stiftkopfes (als Schraubenkopf ausgebildet) des Spannstiftes bzw. der Spannschraube gelagert ist. Diese Lagerung des Schraubenkopfes ermöglicht eine Verspannung des Wendeschneideinsatzes auch bei einem Spannstift, dessen Mittellängsachse relativ zur Bodenfläche des Einsatzsitzes gekippt bzw. schräg angeordnet ist. Dabei soll der durch die Kugellagerung erzielte 360°-Kontakt (bezüglich der Mittelachse des Durchgangsloches) zwischen dem Schraubenkopf und der Lagerfläche des Durchgangsloches eine stabilisierende Wirkung auf die Montageposition des Wendeschneideinsatzes haben. Diese 360°-Lagerung ist allerdings überbestimmt und deshalb hinsichtlich des mechanischen Spannverhaltens nicht einfach zu beherrschen.

Weiterhin ist es z.B. aus US 5 199 828 A und aus WO 2007/094723 A bekannt, einen Lagerkontakt zwischen dem Schraubenkopf und der korrespondierenden Lagerfläche des Durchgangsloches eines Schneideinsatzes nur abschnittsweise (z.B. punktförmig) zu realisieren. Diese konstruktive Ausgestaltung eines Mehrpunkt-Kontaktes zwischen Schraubenkopf und Durchgangsloch führt zu einem erhöhten Verschleiß des Schraubenkopfes. Der Erfindung liegt die Aufgabe zugrunde, ein gattungsgemäßes Schneidwerkzeug bereitzustellen, welches die vorgenannten Nachteile bei der Lagerung des Spannstiftes vermeidet.

Diese Aufgabe wird durch die Merkmalskombination des Anspruches 1 gelöst. Bei dem Schneidwerkzeug - vorzugsweise ein Fräswerkzeug - weist erfindungsgemäß der zur Lagerung vorgesehene Abschnitt des Spannstiftes ein Kugelsegment auf, dessen Oberfläche von einer Segmentnut unterbrochen ist. Die Segmentnut ist als Nut, Rille, Vertiefung, Einstich oder dergleichen in das Kugelsegment eingearbeitet. Hierdurch bleiben einerseits die technischen Vorteile der Lagerung eines Kugelsegmentes für den Spannstift grundsätzlich erhalten. Andererseits vermeidet die Segmentnut die Nachteile eines 360°-Kontaktes zwischen dem Lagerabschnitt des Spannstiftes und der Lagerfläche im Durchgangsloch, bei dem eine konstruktive Überbestimmung die Lagerung des Spannstiftes und somit die gewünschte Verspannung des Schneideinsatzes beeinträchtigen kann. Vielmehr bewirkt die Segmentnut in Umfangsrichtung der Lagerfläche bezüglich der Mittelachse betrachtet eine Unterbrechung des Kontaktes zwischen dem Kugelsegment als Lagerabschnitt des Spannstiftes und der Lagerfläche des Durchgangsloches. Mit anderen Worten entsteht zwischen Kugelsegment und Lagerfläche - trotz der Grundstruktur einer Lagerung für ein Kugelsegment - ein Mehrpunkt-Kontakt mit definierten Kontaktpunkten oder Kontaktzonen, wobei diese Kontaktzonen gemeinsam in einer Ebene der Lagerfläche ein Bogenmaß kleiner als 360° erzielen. Mittels der Segmentnut ist gewährleistet, dass unabhängig von dem Winkel des Spannstiftes (bzw. seiner Mittellängsachse) gegenüber der Bodenfläche des Einsatzsitzes oder gegenüber der Mittelachse des Durchgangsloches eine Kontaktzone vermieden wird, deren Bogenmaß 360° beträgt. Die vorgenannten Vorteile der Segmentnut werden unabhängig von einer spezifischen geometrischen Ausgestaltung der Segmentnut erzielt.

Insbesondere sind mittels der Segmentnut (in einer Querschnittsebene betrachtet) mindestens zwei Kontaktzonen realisiert. Zwei Kontaktzonen sind in Umfangsrichtung voneinander beabstandet und erreichen gemeinsam vorzugsweise ein Bogenmaß von etwa 180°. Es können auch mehr als zwei Kontaktzonen realisiert sein. Die Anzahl der Kontaktzonen beträgt insbesondere ein Vielfaches von zwei Kontaktzonen. Vorzugsweise sind mehrere Segmentnuten vorgesehen. Die gewünschte Anzahl und das gewünschte Bogenmaß der Kontaktzonen kann mit einer geeigneten Anzahl und/oder Geometrie von Segmentnuten erzielt werden.

Mit dem Begriff Kontaktpunkt ist allgemein eine Kontaktzone gemeint. Die Kontaktzonen können punktförmige, linienförmige oder auch flächenförmige Kontakte zwischen Kugelsegment und Lagerfläche ausbilden. Mittels der Segmentnut kann auf spezifisch ausgestaltete Vorsprünge oder dergleichen an der Lagerfläche zur Ausbildung eines Mehrpunkt-Kontaktes verzichtet werden. Folglich werden auch punktuell oder abschnittsweise extrem hohe mechanische Belastungen des Spannstiftes in Montageposition des Spannstiftes vermieden.

Erfindungsgemäß werden somit die Vorteile einer Lagerung eines Kugelsegmentes mit den Vorteilen eines Mehrpunkt-Kontaktes kombiniert und gleichzeitig die oben erläuterten Nachteile vermieden.

Zur Bereitstellung der Segmentnut lässt sich der Spannstift auch nachträglich fertigungstechnisch einfach bearbeiten. Demgegenüber aufwändigere Ausgestaltungen der Lagerfläche am Schneideinsatz zur Ausbildung eines Mehrpunkt-Kontaktes können kostensparend vermieden werden.

In einer bevorzugten Ausführungsform ist das Kugelsegment an dem Stiftkopf des Spannstiftes angeordnet. Hierdurch bildet das Kugelsegment einen Abschnitt des Stiftkopfes, so dass der Stiftkopf in bewährter Weise für die Übertragung der Spannkräfte verwendet wird.

In einer bevorzugten Ausführungsform ist die Segmentnut in einer Umfangsrichtung bezüglich der Mittellängsachse des Spannstiftes in sich geschlossen ausgebildet. Dies unterstützt ein ausgewogenes Verhältnis zwischen Kontaktzonen und kontaktfreien Zonen (Unterbrechungszonen) an der Lagerfläche in dessen Umfangsrichtung und eine gleichmäßige Beanspruchung des Lagerabschnittes (insbesondere des Stiftkopfes) des Spannstiftes in Umfangsrichtung. Extreme mechanische Belastungsspitzen an einzelnen Stellen des Spannstiftes werden auf diese Weise vermieden.

Eine vorzugsweise koaxial zur Mittellängsachse des Spannstiftes bzw. des Stiftkopfes angeordnete Segmentnut ermöglicht eine fertigungstechnisch einfache Bereitstellung der Segmentnut am Stiftkopf.

Vorzugsweise ist auch der kugelsegmentförmige Abschnitt des Spannstiftes koaxial zur Mittellängsachse des Spannstiftes angeordnet und unterstützt hierdurch zusätzlich eine fertigungstechnisch einfache und kostengünstige Herstellung des Spannstiftes.

In einer bevorzugten Ausführung ist das Durchgangsloch im Bereich der Lagerfläche derart ausgestaltet, dass es sich in Richtung der Bodenfläche des Einsatzsitzes verjüngt. Diese Geometrie des Durchgangsloches ermöglicht eine mechanisch stabile Lagerung des Spannstiftes, insbesondere seines Stiftkopfes, während und nach seiner Montage.

Es ist vorteilhaft, wenn das Durchgangsloch einen kreisförmigen Querschnitt aufweist. Insbesondere ist zumindest der die Lagerfläche aufweisende Bereich bzw. Abschnitt des Durchgangsloches kreisförmig ausgestaltet. Der kreisförmige Querschnitt bewirkt auf konstruktiv einfache Weise eine gleichmäßig stabile Lagerung des Spannstiftes, auch wenn der Schneideinsatz aufgrund seiner Mehrzahl von Schneidkanten mehrfach verwendet wird.

In einer weiteren vorteilhaften Ausführungsform sind der Spannstift und das Durchgangsloch derart dimensioniert, dass ein größter Querschnitt des Kugelsegmentes größer ist als ein kleinster Querschnitt der Lagerfläche. Dies gewährleistet eine stabile Anlage des Kugelsegmentes an der Lagerfläche. Außerdem vermeidet diese Dimensionierung zuverlässig fehlerhafte Montagevorgänge.

Eine montagetechnisch einfache Handhabung des Spannstiftes im Durchgangsloch wird erzielt, wenn der Stiftkopf einen Querschnitt aufweist, der höchstens so groß ist wie der größte Querschnitt des Kugelsegmentes selbst. Einzelne Abschnitte des Stiftkopfes weisen dann z.B. einen zylindrischen Querschnitt auf, dessen Durchmesser höchstens so groß ist wie der Durchmesser des größten Kugelsegment-Querschnittes. Ein derartiger Stiftkopf unterstützt eine möglichst kleine Dimensionierung des Durchgangsloches, wodurch die Stabilität des Schneideinsatzes erhöht wird.

Eine konstruktiv einfache Gestaltung des Durchgangsloches und somit des gesamten Schneideinsatzes wird erzielt, wenn die Lagerfläche rotationssymmetrisch zur Mittelachse des Durchgangsloches ausgebildet ist. Insbesondere sind abgesehen von der Lagerfläche noch weitere Abschnitte der Lochwandung - z.B. die gesamte Lochwandung bzw. Oberfläche - des Durchgangsloches rotationssymmetrisch zu dessen Mittelachse ausgebildet. Diese bevorzugten Ausführungsformen unterstützen eine gleichmäßige Verteilung der Spannkräfte auf den Schneideinsatz.

In einer weiteren bevorzugten Ausführungsvariante ist die Mittelachse des Durchgangsloches rechtwinklig zu einer Oberfläche oder zwei gegenüberliegenden Oberflächen des Schneideinsatzes angeordnet. Eine Oberfläche ist insbesondere als eine Spanfläche oder als eine der Bodenfläche des Einsatzsitzes zugewandte Auflagefläche des Schneideinsatzes ausgebildet. Dabei können die Mittelachse des Durchgangsloches und die Mittellängsachse des Spannstiftes in einem spitzen Winkel zueinander angeordnet sein. In diesem Fall ist die Mittellängsachse des Spannstiftes vorzugsweise geneigt bzw. schräg gegenüber der Bodenfläche des Einsatzsitzes und der dazu korrespondierenden Auflagefläche des Schneideinsatzes angeordnet. Hierdurch können bei grundsätzlich gleichartigem Werkzeugaufbau eine größere Anzahl von Einsatzsitzen bzw. Schneideinsätzen am Werkzeuggrundkörper vorgesehen werden.

In einer bewährten Ausführungsform ist der Spannstift kostengünstig als Spannschraube mit einem Schraubenkopf als Stiftkopf ausgebildet.

Im Folgenden wird die Erfindung an Hand der in den Zeichnungen dargestellten Ausführungsbeispiele näher erläutert.

Es zeigen:
- Figur 1: eine perspektivische Darstellung des erfindungsgemäßen Schneidwerkzeugs mit einem Werkzeuggrundkörper und daran verspannten Schneideinsätzen
- Figur 2: eine perspektivische Darstellung eines Schneideinsatzes gemäß Fig. 1
- Figur 3: eine Seitenansicht eines Spannstiftes zur Verspannung eines Schneideinsatzes gemäß Fig. 1
- Figur 4: eine Draufsicht des Schneideinsatzes gemäß Fig. 2 und daran angelegtem Spannstift gemäß Fig. 3
- Figur 5: eine geschnittene Seitenansicht entlang der Schnittlinie V-V in Fig. 4
- Figur 6: eine geschnittene Draufsicht des Schneideinsatzes und des Spannstiftes gemäß Fig. 4, entlang der Schnittlinie VI-VI in Fig. 5
- Figur 7: eine vergrößerte Darstellung des Details VII in Fig. 5

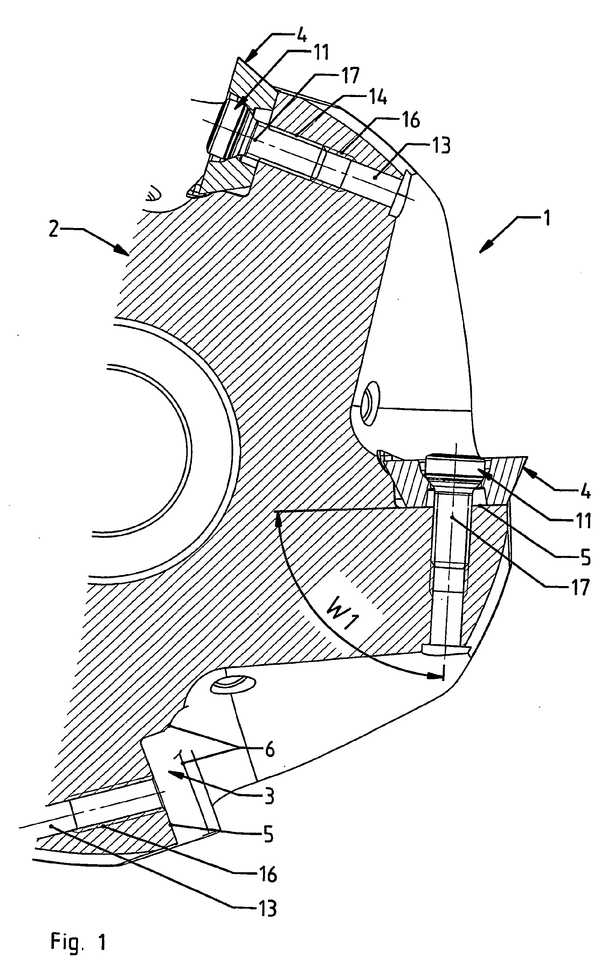

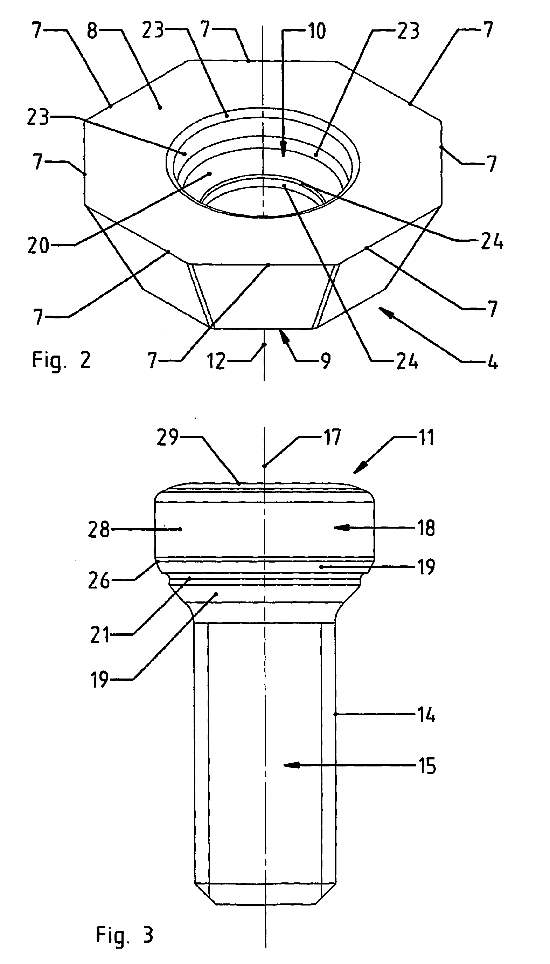

Das in Fig. 1 dargestellte Schneidwerkzeug -1- ist ein Werkzeug zum Fräsen und enthält einen Werkzeuggrundkörper -2-. Der Kopfteil des Werkzeuggrundkörpers -2- weist mehrere Einsatzsitze -3- zur Lagerung jeweils eines auswechselbaren Schneideinsatzes -4- auf. Der Einsatzsitz -3- weist eine Bodenfläche -5- sowie seitliche Anlageflächen -6- zur Positionierung des Schneideinsatzes -4- auf. Der Schneideinsatz -4- weist einen oktagonalen Querschnitt mit entsprechend acht Schneidkanten -7- auf (Fig. 2), so dass der Schneideinsatz -4- mehrfach mit jeweils einer aktiven Schneidkante -7-verwendet wird. Der Schneideinsatz -4- ist von einer ersten Oberfläche -8-(üblicherweise die Bereiche der Spanfläche) bis zu seiner gegenüberliegenden, in Montageposition der Bodenfläche -5- zugewandten Auflagefläche -9- von einem zentralen Durchgangsloch -10- durchsetzt. Die Auflagefläche -9- stützt sich in Montageposition des Schneideinsatzes -4- an der Bodenfläche -5- ab. Jeder Schneideinsatz -4- wird mittels eines Spannstiftes in Form einer Spannschraube -11- am Einsatzsitz -3- verspannt. Die Spannschraube -11-durchsetzt das eine zentrale Mittelachse -12- aufweisende Durchgangsloch -10-, die Bodenfläche -5- sowie ein sich an die Bodenfläche -5- anschließendes Aufnahmeloch -13- im Werkzeuggrundkörper -2-. Die Spannschraube -11- wird im Aufnahmeloch -13-mit dem Werkzeuggrundkörper -2- verschraubt. Hierzu korrespondiert ein Außengewinde -14- eines Schraubenschaftes -15- der Spannschraube -11- mit einem Innengewinde -16- des Aufnahmeloches -13-. Eine Mittellängsachse -17-der verschraubten Spannschraube -11- ist in einem spitzen Winkel -W1- zu der Bodenfläche -5- angeordnet.

An den Schraubenschaft -15- schließt sich ein Stiftkopf in Form eines Schraubenkopfes -18- an (Fig. 3). Der Schraubenkopf -18- weist einen Abschnitt in Form eines Kugelsegmentes -19- auf. In Montageposition ist der Schraubenkopf -18- mit seinem Kugelsegment -19- an einer Lagerfläche -20-des Durchgangsloches -10- gelagert. Die Oberfläche des Kugelsegments -19-ist von einer Segmentnut -21- unterbrochen. Diese Segmentnut -21- ist in einer Umfangsrichtung -22- in sich geschlossen ausgebildet. Dabei ist die Segmentnut -21- koaxial zur Mittellängsachse -17- angeordnet. Auch das Kugelsegment -19- ist koaxial zur Mittellängsachse -17- angeordnet. Sowohl die Segmentnut -21- als auch das Kugelsegment -19- sind rotationssymmetrisch bezüglich der Mittellängsachse -17- als Rotationsachse ausgebildet.

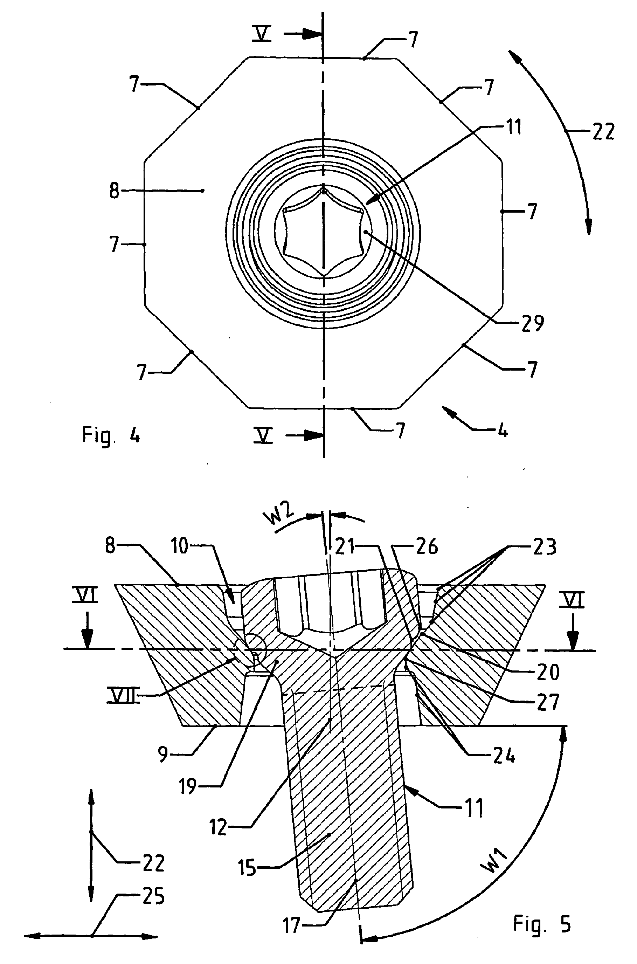

Die Lochwandung des Durchgangsloches -10- weist entlang der Mittelachse -12- mehrere Abschnitte auf. Ein Abschnitt ist durch die Lagerfläche -20- gebildet, welche sich im Querschnitt gemäß Fig. 5 gesehen in Richtung der der Bodenfläche -5- zugewandten zweiten Oberfläche -9- des Schneideinsatzes -4- konisch verjüngt. Die verschiedenen Abschnitte des Durchgangsloches -10- weisen jeweils einen kreisförmigen Querschnitt auf, wie in Fig. 2 und Fig. 4 erkennbar ist. Dabei sind die Lagerfläche -20- und sämtliche übrigen Abschnitte der Lochwandung des Durchgangsloches -10- koaxial und aufgrund ihres kreisrunden Querschnittes rotationssymmetrisch bezüglich der Mittelachse -12- als Rotationsachse ausgebildet.

Zwischen der Lagerfläche -20- und der ersten Oberfläche -8- des Schneideinsatzes -4- sind in Axialrichtung -22-, d.h. entlang der Mittelachse -12-, mehrere Abschnitte -23- der Lochwandung des Durchgangsloches -10- angeordnet. Ausgehend von der ersten Oberfläche -8-verjüngen sich die Querschnitte dieser Abschnitte -23- in Richtung der Lagerfläche -20- (Fig. 5). Zwischen der Lagerfläche -20- und der Auflagefläche -9- des Schneideinsatzes -4- befinden sich mehrere Abschnitte -24- der Lochwandung. Die Querschnitte dieser Abschnitte -24- sind in Axialrichtung -22- entweder konstant oder in Richtung der zweiten Oberfläche -9- konisch aufgeweitet. Aufgrund des Querschnittsverlaufes der einzelnen Bereiche bzw. Abschnitte der Lochwandung weist das Durchgangsloch ein sogenanntes Trompetenloch zur Aufnahme der Spannschraube -11- bzw. ihres Schraubenkopfes -18- auf. Die Abschnitte -24-bieten genügend radiales Spiel in Radialrichtung -25- für eine Spannschraube -11-, welche mit ihrer Mittellängsachse -17- schräg bzw. in einem spitzen Winkel -W2- zur Mittelachse -12- des Durchgangsloches -10-montiert wird. Dabei gilt für den Winkel -W2- : -W2- = 90° -W1-. Die Mittelachse -12- ist etwa rechtwinklig zu der ersten Oberfläche -8- und der gegenüberliegenden Auflagefläche -9- angeordnet.

Anhand von Fig. 5 ist erkennbar, dass der größte Querschnitt -26- des Kugelsegmentes -19- größer ist als der kleinste Querschnitt -27- der Lagerfläche -20- des Durchgangsloches -10-. Der sich an diesen größten Querschnitt -26- unmittelbar anschließende Kopfabschnitt -28- des Schraubenkopfes -18- ist zylindrisch ausgebildet mit einem Durchmesser, der etwa dem Durchmesser des größten Querschnittes -26- entspricht (Fig. 3). Ein zwischen dem zylindrischen Kopfabschnitt -28- und einer freien Deckfläche -29- des Schraubenkopfes -18- angeordneter Abschnitt des Schraubenkopfes -18- ist konisch verjüngt ausgebildet. Die freie Deckfläche -29- ist die dem Schraubenschaft -15- axial abgewandte Außenfläche des Schraubenkopfes -18-.

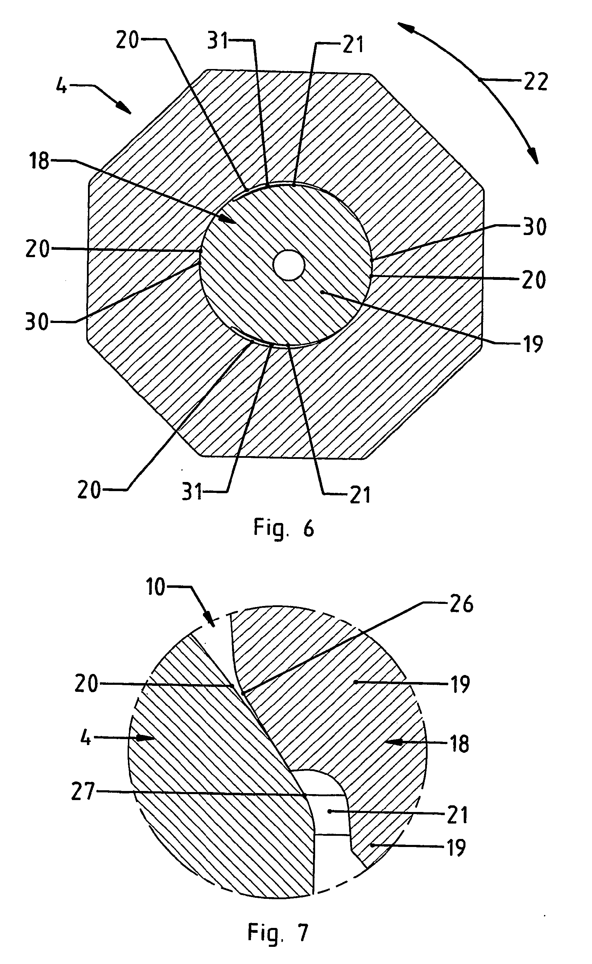

Während der Montage der Spannschraube -11- kommt es zu einer Anlage der Oberfläche des Kugelsegmentes -19- an die Lagerfläche -20- (Fig. 7). Wegen der Segmentnut -21- existiert keine Ebene, in der entlang der Umfangsrichtung -22- betrachtet eine Kontaktzone von 360° Bogenmaß erreicht wird. Vielmehr entsteht mittels der Segmentnut -21- ein Zwei-Punkt-Kontakt zwischen dem Kugelsegment -19- und der Lagerfläche -20-, indem zwei Kontaktzonen -30- gebildet sind (Fig. 6). Diese Kontaktzonen -30- bilden in dem Ausführungsbeispiel einen linien- oder flächenförmigen Kontakt. Die beiden Kontaktzonen -30- sind mittels zwei Unterbrechungszonen -31- in Umfangsrichtung -22- voneinander getrennt. In diesen

Unterbrechungszonen -31- ist die Segmentnut -21- als Kontaktunterbrechung zwischen dem Kugelsegment -19- und der Lagerfläche -20- wirksam. Hierdurch sind zwei längere Kontaktzonen -30- und gleichzeitig eine eindeutig definierte Lagerung des Kugelsegementes -19- der Spannschraube -11- realisiert. Auf diese Weise sind die Vorteile einer Kugellagerung für den Schraubenkopf -18-mit den Vorteilen eines Mehrpunkt-Kontaktes zwischen dem Schraubenkopf -18- und der Lagerfläche -20- kombiniert und gleichzeitig die jeweiligen Nachteile vermieden.

## Patentansprüche

1. Schneidwerkzeug (1)
- mit einem Werkzeuggrundkörper (2) und mindestens einem daran angeordneten Einsatzsitz (3) mit einer Bodenfläche (5) zur Lagerung eines Schneideinsatzes (4) und
- mit einem Spannstift (11), welcher ein eine Mittelachse (12) aufweisendes Durchgangsloch (10) des gelagerten Schneideinsatzes (4) und die Bodenfläche (5) durchsetzt und an dem Werkzeuggrundkörper (2) fixierbar ist, wobei
-- eine Mittellängsachse (17) des fixierten Spannstiftes (11) in einem spitzen Winkel (W1) zu der Bodenfläche (5) angeordnet ist und
-- der Spannstift (11) ein Kugelsegment (19) zur Lagerung an einer Lagerfläche (20) des Durchgangsloches (10) und einen Stiftkopf (18) aufweist,
**dadurch gekennzeichnet,**
**dass** die Oberfläche des Kugelsegments (19) von einer Segmentnut (21) unterbrochen ist.

2. Schneidwerkzeug nach Anspruch 1, **dadurch gekennzeichnet, dass** das Kugelsegment (19) an dem Stiftkopf (18) angeordnet ist.

3. Schneidwerkzeug nach Anspruch 1 oder 2, **dadurch gekennzeichnet, dass** die Segmentnut (21) in einer Umfangsrichtung (22) bezüglich der Mittellängsachse (17) in sich geschlossen ist.

4. Schneidwerkzeug nach einem der vorhergehenden Ansprüche, **dadurch gekennzeichnet, dass** die Segmentnut (21) koaxial zur Mittellängsachse (17) angeordnet ist.

5. Schneidwerkzeug nach einem der vorhergehenden Ansprüche, **dadurch gekennzeichnet, dass** das Kugelsegment (19) koaxial zur Mittellängsachse (17) angeordnet ist.

6. Schneidwerkzeug nach einem der vorhergehenden Ansprüche, **dadurch gekennzeichnet, dass** der die Lagerfläche (20) aufweisende Bereich des Durchgangsloches (10) sich in Richtung der Bodenfläche (5) des Einsatzsitzes (3) verjüngt.

7. Schneidwerkzeug nach einem der vorhergehenden Ansprüche, **dadurch gekennzeichnet, dass** das Durchgangsloch (10), insbesondere im Bereich der Lagerfläche (20), einen kreisförmigen Querschnitt aufweist.

8. Schneidwerkzeug nach einem der vorhergehenden Ansprüche, **dadurch gekennzeichnet, dass** ein größter Querschnitt (26) des Kugelsegmentes (19) größer ist als ein kleinster Querschnitt (27) der Lagerfläche (20) des Durchgangsloches (10).

9. Schneidwerkzeug nach einem der vorhergehenden Ansprüche, **dadurch gekennzeichnet, dass** die einzelne Abschnitte (28) des Stiftkopfes (18) einen Querschnitt aufweisen, der höchstens so groß ist wie ein größter Querschnitt (26) des Kugelsegmentes (19).

10. Schneidwerkzeug nach einem der vorhergehenden Ansprüche, **dadurch gekennzeichnet, dass** die Lagerfläche (20) des Durchgangsloches (10) rotationssymmetrisch zu dessen Mittelachse (12) ausgebildet ist.

11. Schneidwerkzeug nach Anspruch 10, **dadurch gekennzeichnet, dass** die gesamte Lochwandung (20, 23, 24) des Durchgangsloches (10) rotationssymmetrisch zu dessen Mittelachse (12) ausgebildet ist.

12. Schneidwerkzeug nach einem der vorhergehenden Ansprüche, **dadurch gekennzeichnet, dass** die Mittelachse (12) des Durchgangsloches (10) rechtwinklig zu einer Oberfläche (8, 9), insbesondere einer der Bodenfläche (5) zugewandten Auflagefläche (9), des Schneideinsatzes (4) angeordnet ist.

13. Schneidwerkzeug nach einem der vorhergehenden Ansprüche, **dadurch gekennzeichnet, dass** die Mittelachse (12) des Durchgangsloches (10) und die Mittellängsachse (17) des Spannstiftes (11) in einem spitzen Winkel (W2) zueinander angeordnet sind.

14. Schneidwerkzeug nach einem der vorhergehenden Ansprüche, **dadurch gekennzeichnet, dass** der Spannstift als eine Spannschraube (11) mit einem Schraubenkopf (18) als Stiftkopf ausgebildet ist.

## Claims

1. A cutting tool (1)
- having a basic tool body (2) and at least one insert seat (3) arranged thereon, said insert seat having a bottom surface (5) for the mounting arrangement of a cutting insert (4) and
- having a dowel pin (11) which penetrates a through-hole (10) of the mounted cutting insert (4) and the bottom surface (5), said through-hole having a center axis (12), and can be secured to the basic tool body (2), wherein
-- a center longitudinal axis (17) of the secured dowel pin (11) is arranged at an acute angle (W1) with respect to the bottom surface (5) and
-- the dowel pin (11) has a spherical segment (19) for the mounting arrangement on a bearing surface (20) of the through-hole (10) and has a pin head (18),
**characterized in that** the surface of the spherical segment (19) is interrupted by a segment groove (21).

2. The cutting tool as claimed in claim 1, **characterized in that** the spherical segment (19) is arranged on the pin head (18).

3. The cutting tool as claimed in claim 1 or 2, **characterized in that** the segment groove (21) is closed per se in a circumferential direction (22) with reference to the center longitudinal axis (17).

4. The cutting tool as claimed in one of the preceding claims, **characterized in that** the segment groove (21) is arranged coaxially with respect to the center longitudinal axis (17).

5. The cutting tool as claimed in one of the preceding claims, **characterized in that** the spherical segment (19) is arranged coaxially with respect to the center longitudinal axis (17).

6. The cutting tool as claimed in one of the preceding claims, **characterized in that** the region of the through-hole (10) having the bearing surface (20) is tapered in the direction of the bottom surface (5) of the insert seat (3).

7. The cutting tool as claimed in one of the preceding claims, **characterized in that** the through-hole (10), in particular in the region of the bearing surface (20), has a circular cross section.

8. The cutting tool as claimed in one of the preceding claims, **characterized in that** a largest cross section (26) of the spherical segment (19) is greater than a smallest cross section (27) of the bearing surface (20) of the through-hole (10).

9. The cutting tool as claimed in one of the preceding claims, **characterized in that** the individual portions (28) of the pin head (18) have a cross section which, at its largest, is as large as a largest cross section (26) of the spherical segment (19).

10. The cutting tool as claimed in one of the preceding claims, **characterized in that** the bearing surface (20) of the through-hole (10) is realized in a rotationally symmetrical manner with respect to its center axis (12).

11. The cutting tool as claimed in claim 10, **characterized in that** the entire hole wall (20, 23, 24) of the through-hole (10) is realized in a rotationally symmetrical manner with respect to its center axis (12).

12. The cutting tool as claimed in one of the preceding claims, **characterized in that** the center axis (12) of the through-hole (10) is arranged at a right angle with respect to a surface (8, 9) of the cutting insert (4), in particular with respect to a contact surface (9) that faces the bottom surface (5).

13. The cutting tool as claimed in one of the preceding claims, **characterized in that** the center axis (12) of the through-hole (10) and the center longitudinal axis (17) of the dowel pin (11) are arranged at an acute angle (W2) with respect to each other.

14. The cutting tool as claimed in one of the preceding claims, **characterized in that** the dowel pin is realized as a clamping screw (11) with a screw head (18) as the pin head.

## Revendications

1. Outil de coupe (1)
- comprenant un corps d'outil (2) doté d'au moins un logement de plaquette (3) incluant une surface de fond (5) et destiné à recevoir une plaquette de coupe (4),
- comprenant, en outre, une broche de serrage (11) qui traverse un orifice de passage (10) ménagé dans la plaquette de coupe (4) installée dans son logement, puis la surface de fond (5), ledit orifice (10) présentant un axe (12) et ladite broche de serrage (11) étant fixable sur le corps d'outil (2),
- tandis qu'un axe longitudinal (17) de ladite broche de serrage (11) fixée est disposé selon un angle aigu (W1) par rapport à la surface de fond (5)
- et que la broche de serrage (11) comporte, premièrement, un segment sphérique (19) destiné à être logé sur une surface d'appui (20) de l'orifice de passage (10) et, deuxièmement, une tête de broche (18),
**caractérisé en ce que** la superficie du segment sphérique (19) est interrompue par une gorge (21).

2. Outil de coupe selon la revendication 1, **caractérisé en ce que** le segment sphérique (19) est agencé au niveau de la tête de broche (18).

3. Outil de coupe selon la revendication 1 ou 2, **caractérisé en ce que** la gorge (21) du segment (19) est refermée sur elle-même dans une direction circonférentielle (22) par rapport à l'axe longitudinal (17).

4. Outil de coupe selon l'une quelconque des revendications précédentes, **caractérisé en ce que** la gorge (21) est disposée coaxialement par rapport à l'axe longitudinal (17).

5. Outil de coupe selon l'une quelconque des revendications précédentes, **caractérisé en ce que** le segment sphérique (19) est disposé coaxialement par rapport à l'axe longitudinal (17).

6. Outil de coupe selon l'une quelconque des revendications précédentes, **caractérisé en ce que** la zone de l'orifice de passage (10) qui inclut la surface d'appui (20) se rétrécit en direction de la surface de fond (5) du logement de plaquette (3).

7. Outil de coupe selon l'une quelconque des revendications précédentes, **caractérisé en ce que** l'orifice de passage (10) présente une coupe transversale de forme circulaire, en particulier au niveau de la surface d'appui (20).

8. Outil de coupe selon l'une quelconque des revendications précédentes, **caractérisé en ce qu'**une coupe transversale de taille maximale (26) du segment sphérique (19) est supérieure à une coupe transversale de taille minimale (27) de la surface d'appui (20) de l'orifice de passage (10).

9. Outil de coupe selon l'une quelconque des revendications précédentes, **caractérisé en ce que** les différents secteurs (28) de la tête de broche (18) présentent une coupe transversale au maximum aussi grande qu'une coupe transversale de taille maximale (26) du segment sphérique (19).

10. Outil de coupe selon l'une quelconque des revendications précédentes, **caractérisé en ce que** la surface d'appui (20) de l'orifice de passage (10) est symétrique en rotation autour de l'axe (12) dudit orifice.

11. Outil de coupe selon la revendication 10, **caractérisé en ce que** la totalité de la paroi (20, 23, 24) de l'orifice de passage (10) est symétrique en rotation autour de l'axe (12) dudit orifice.

12. Outil de coupe selon l'une quelconque des revendications précédentes, **caractérisé en ce que** l'axe (12) de l'orifice de passage (10) est disposé perpendiculairement à une surface (8, 9), en particulier à une surface d'appui (9) - orientée vers la surface de fond (5) - de la plaquette (4).

13. Outil de coupe selon l'une quelconque des revendications précédentes, **caractérisé en ce que** l'axe (12) de l'orifice de passage (10) et l'axe longitudinal (17) de la broche de serrage (11) sont agencés l'un par rapport à l'autre selon un angle aigu (W2).

14. Outil de coupe selon l'une quelconque des revendications précédentes, **caractérisé en ce que** la broche de serrage est réalisée sous forme de vis de serrage (11) comprenant comme tête de broche une tête de vis (18).
